(19) Europäisches Patentamt
European Patent Office
Office européen des brevets

(11) **EP 3 296 357 B1**

(12) **EUROPEAN PATENT SPECIFICATION**

(45) Date of publication and mention
of the grant of the patent:
**03.07.2019  Bulletin 2019/27**

(51) Int Cl.:
***C08L 25/14*** (2006.01)     ***C08L 33/12*** (2006.01)
***C08F 212/08*** (2006.01)     ***C08F 220/14*** (2006.01)
***C08F 222/06*** (2006.01)

(21) Application number: **16792688.0**

(22) Date of filing: **10.05.2016**

(86) International application number:
**PCT/JP2016/063872**

(87) International publication number:
**WO 2016/181963 (17.11.2016 Gazette 2016/46)**

(54) **RESIN COMPOSITION FOR TRANSPARENT AUTOMOBILE MEMBERS, TRANSPARENT COVER FOR METER PANEL, AND HEMISPHERICAL LENS**

HARZZUSAMMENSETZUNG FÜR TRANSPARENTE AUTOMOBILELEMENTE, TRANSPARENTE ABDECKUNG FÜR EINE INSTRUMENTENTAFEL UND HALBKUGELFÖRMIGE LINSE

COMPOSITION DE RÉSINE, TRANSPARENTS, PROTECTION TRANSPARENTE POUR PANNEAU DE COMPTEUR, ET LENTILLE HÉMISPHÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2015   JP 2015096415**

(43) Date of publication of application:
**21.03.2018   Bulletin 2018/12**

(73) Proprietor: **Denka Company Limited**
**Tokyo 103-8338 (JP)**

(72) Inventors:
• **KUROKAWA, Yoshinari**
**Ichihara-city**
**Chiba 290-8588 (JP)**
• **SHIMOKOBA, Yuichi**
**Ichihara-city**
**Chiba 290-8588 (JP)**

• **MATSUMOTO, Masanori**
**Ichihara-city**
**Chiba 290-8588 (JP)**
• **NISHINO, Kohhei**
**Ichihara-city**
**Chiba 290-8588 (JP)**
• **NOGUCHI, Tetsuo**
**Ichihara-city**
**Chiba 290-8588 (JP)**

(74) Representative: **Gulde & Partner**
**Patent- und Rechtsanwaltskanzlei mbB**
**Wallstraße 58/59**
**10179 Berlin (DE)**

(56) References cited:
**EP-A1- 3 181 600        WO-A1-2014/021264**
**WO-A1-2014/021265     WO-A1-2014/065129**
**JP-A- S6 211 760        JP-A- 2014 159 517**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a resin composition, a resin composition for an automobile transparent member and a molded article thereof, particularly to a transparent cover for a meter panel and a hemispherical lens of an automobile.

## Background Art

Since methacrylic resins have excellent transparency, weather resistance and well-balanced mechanical properties, they have been widely used as a transparent injection molded article. However, when methacrylic resins are used for applications requiring high heat resistance such as transparency members of automobiles, the heat resistance may be insufficient. As techniques for improving the heat resistance, there are ones described in JP S57-153008 A, JP 2011-26563 A and WO 2014/021264 A1.

JP 2014-159517 A discloses a light guiding plate made from a resin composition comprising a styrene-based copolymer. The resin composition may further comprise a methacrylic resin in order to enhance transparency.

WO 2014/065129 A1 discloses a styrene-based copolymer for improving the heat resistance of an aromatic vinyl-vinyl cyanide resin. The resulting resin composition comprises 5-50 mass% of the styrene-based copolymer and 50-95 mass% of an aromatic vinyl-vinyl cyanide copolymer.

WO 2014/021264 A1 discloses a styrene-based copolymer for improving the heat resistance of a methacrylic resin. For this purpose, 5-50 mass% of the styrene-based copolymer are blended with 50-95 mass% of the methacrylic resin.

JP S62-11760 A1 discloses a rubber modified nylon composition comprising a graft rubber composition, a polyamide resin, and a styrene-based terpolymer.

WO 2014/021265 A1 discloses a styrene-based copolymer for optical compensation films.

EP 3181600 A1 discloses a styrene-based copolymer that has a heat resistance improvement effect, with respect to a methacrylic resin. The resin composition according to EP 3181600 A1 comprises 5-50 mass% of the styrene-based copolymer and 50-95 mass% of the methacrylic resin.

## Summary of Invention

### Technical Problem

An object of the present invention is to provide a resin composition capable of producing a molded article excellent in transparency, heat resistance, surface hardness, moldability, impact resistance, and appearance, and to provide a molded article obtained from the said resin composition, in particular, a transparent cover for a meter panel of an automobile, and a hemispherical lens for an automobile.

### Solution to Problem

That is, the present invention is as follows.

(1) A resin composition comprising 55 to 70 mass% of a styrene-based copolymer (A) and 30 to 45 mass% of a methacrylic resin (B), wherein the styrene-based copolymer (A) comprises 45 to 85 mass% of an aromatic vinyl monomer unit, 5 to 45 mass% of a (meth)acrylic ester monomer unit, and 10 to 30 mass% of an unsaturated dicarboxylic anhydride monomer unit, and has a weight average molecular weight (Mw) of 100,000 to 300,000, and a total light transmittance of 89% or more for a thickness of 2 mm.

(2) The resin composition of (1), wherein the charpy notchless impact strength is 10kJ / $m^2$ or more.

(3) The resin composition of (1) or (2), wherein the vicat softening temperature(load: 50N, programming rate: 50°C / hour)is 115°C or more.

(4) A resin composition for an automobile transparent member comprising the resin composition according to any one of (1) to (3).

(5) A transparent cover for a meter panel obtained from the resin composition for an automobile transparent member according to (4).

(6) A hemispherical lens obtained from the resin composition for an automobile transparent member according to (4).

### Advantageous Effects of Invention

The molded article produced using the resin composition of the present invention is excellent in transparency, heat resistance, surface hardness, moldability, impact resistance and appearance. Therefore, the resin composition of the present invention can be applied to any application requiring such characteristics, and is particularly useful for automobile transparent members. Since the resin composition of the present invention is excellent in transparency and heat resistance, surface hardness, impact resistance, appearance and visibility of a meter panel, it is useful for a transparent cover for a meter panel of an automobile which is required to have heat resistance.

**Description of Embodiments**

< Explanation of Terms >

In the present specification, for example, the expression "A to B" means A or more and B or less.

Hereinafter, embodiments of the present invention will be described in detail.

The styrene-based copolymer is a copolymer having a unit structure derived from an aromatic vinyl monomer, a (meth) acrylic ester monomer, and an unsaturated dicarboxylic anhydride monomer.

The styrene-based copolymer can be obtained by copolymerizing an aromatic vinyl monomer, a (meth) acrylic ester monomer and an unsaturated dicarboxylic anhydride monomer.

The aromatic vinyl monomer in the styrene-based copolymer is styrene, o-methylstyrene, m-methylstyrene, p-methylstyrene, 2,4-dimethylstyrene, ethylstyrene, p-tert-butylstyrene, $\alpha$-methylstyrene, $\alpha$-methyl-p-methylstyrene and the like. Among these, styrene is preferred. The aromatic vinyl monomer can be used alone, or two or more kinds can be used in combination.

The (meth) acrylic ester monomer in the styrene-based copolymer is methacrylic ester monomer such as methyl methacrylate, ethyl methacrylate, n-butyl methacrylate, 2-ethylhexyl methacrylate, dicyclopentanyl methacrylate, isobornyl methacrylate; acrylic ester monomer such as methyl acrylate, ethyl acrylate, n-butyl acrylate, 2-methylhexyl acrylate, 2-ethylhexyl acrylate, decyl acrylate. Among these, methyl methacrylate unit is preferred. The (meth) acrylic ester monomer can be used alone, or two or more kinds can be used in combination.

The unsaturated dicarboxylic anhydride monomer in the styrene-based copolymer is maleic anhydride, itaconic anhydride, citraconic anhydride, aconitic anhydride and the like. Among these, maleic anhydride is preferred. The unsaturated dicarboxylic anhydride monomer can be used alone, or two or more kinds can be used in combination.

The constituent unit of the styrene-based copolymer is 45 to 85 mass% of an aromatic vinyl monomer unit, 5 to 45 mass% of a (meth) acrylic ester monomer unit, and 10 to 30 mass% of an unsaturated dicarboxylic anhydride monomer unit, preferably 50 to 73 mass% of an aromatic vinyl monomer unit, 15 to 35 mass% of a (meth) acrylic ester monomer unit, and 12 to 25 mass% of an unsaturated dicarboxylic anhydride monomer unit.

When the aromatic vinyl monomer unit styrene-based polymer is less than 45 mass% or the (meth) acrylic ester monomer unit is more than 45 mass%, yellowness becomes stronger. The aromatic vinyl monomer unit in the styrene-based polymer is more than 85 mass% or the (meth) acrylic ester monomer unit is less than 5 mass%, the surface hardness decreases, and the haze increases. When the unsaturated dicarboxylic anhydride monomer unit in the styrene-based polymer is less than 10 mass%, the heat resistance is lowered. When the unsaturated dicarboxylic anhydride monomer unit in the styrene-based polymer is more than 30 mass%, yellowness becomes stronger and the haze increases.

The weight average molecular weight (Mw) of the styrene-based copolymer is preferably 100,000 to 300,000, and more preferably 140,000 to 250,000. When the weight average molecular weight (Mw) is less than 100,000, the strength decreases, whereas when it is more than 300,000, the formability deteriorates. The weight average molecular weight (Mw) of the styrene-based copolymer can be controlled by the polymerization temperature in the polymerization process, the kind and addition amount of the polymerization initiator, the kind and amount of the chain transfer agent, the kind and amount of the solvent used during polymerization, and the like. The weight average molecular weight (Mw) is a polystyrene equivalent value measured by gel permeation chromatography (GPC) and is a measurement value under the measurement conditions described below.

Device name: SYSTEM-21 Shodex(available from Showa Denko K.K.)
Column: Three PL gel MIXED-B series
Temperature:40°C
Detection: Differential refractive index
Solvent: Tetrahydrofuran
Concentration:2 mass%
Calibration curve: it was prepared using standard polystyrene (PS) (available from PL).

The charpy notchless impact strength of the styrene-based copolymer is preferably 5kJ / $m^2$ or more, more preferably 8kJ / $m^2$ or more. The charpy notchless impact strength is a value measured at 23°C according to JIS K 7111 using a specimen having a size of 80 mm × 10 mm and a thickness of 4 mm.

A total light transmittance for a thickness of 2 mm of the styrene-based copolymer is preferably 89% or more and more preferably 90% or more. The total light transmittance is a value obtained by measuring a mirror surface plate with a thickness of 2 mm according to ASTM D 1003.

A production method of the styrene-based copolymer will be described. Examples of the polymerization procedure include, but are not particularly limited to, known methods such as solution polymerization and bulk polymerization can be used, but solution polymerization is more preferable. The solvent used in the solution polymerization is preferably non-polymerizable from the viewpoint that by-products are difficult to form and adverse effects are small. The kind of the solvent is not particularly limited, but examples thereof include ketones such as acetone, methyl ethyl ketone, methyl isobutyl ketone, acetophenone; ethers such as tetrahydrofuran, 1,4-dioxane; Aromatic hydrocarbons such as toluene, ethylbenzene, xylene, chlorobenzene; and the like, but from the viewpoints of the solubility of monomers and copolymers and ease of solvent recovery, methyl ethyl ketone and methyl isobutyl ketone are preferable. The addition amount of the solvent is preferably 10 to 100 parts by mass, more preferably 30 to 80 parts by mass with respect to 100 parts by mass of the obtained copolymer. When the addition amount of the solvent is 10 parts by mass or more, it is suitable for controlling the reaction rate and viscosity of the polymerization solution, and if it is 100 parts by mass or less, it is preferable for obtaining the desired weight average molecular weight (Mw).

Batch polymerization, semi-batch polymerization or continuous polymerization may be used as the polymerization process, but the batch polymerization is preferable for obtaining a desired molecular weight range and transparency.

The polymerization method is not particularly limited, but the radical polymerization method is preferable from the viewpoint that it can be manufactured with a good productivity by a simple process. The polymerization initiator is not particularly limited, but for example, known organic peroxides such as dibenzoyl peroxide, t-butyl peroxybenzoate and 1,1-bis (t-butylperoxy) -2-methylcyclohexane, t-butyl peroxy isopropyl monocarbonate, t-butyl peroxy-2-ethyl hexanoate, t-butyl peroxyacetate, dicumyl peroxide, ethyl 3,3-di- (t-butylperoxy) butyrate; known azo compounds such as azobisisobutyronitrile, azobiscyclohexanecarbonitrile, azobismethylpropionitrile, azobismethylbutyronitrile can be used. Two or more of these polymerization initiators can be used in combination. Among these, organic peroxides having a 10-hour half-life temperature of 70 to 110 °C. are preferably used.

During the polymerization of the styrene-based copolymer, it is preferable to perform polymerization so that the copolymer composition distribution becomes small. Since the aromatic vinyl monomer and the unsaturated dicarboxylic anhydride monomer have strong alternating copolymerizability, the method of separately adding the aromatic vinyl monomer and the (meth) acrylic ester monomer continuously so as to correspond to the polymerization rate of the unsaturated dicarboxylic anhydride monomer is suitable. The polymerization rate can be controlled by adjusting the polymerization temperature, the polymerization time, and the addition amount of the polymerization initiator. Continuous separate addition of the polymerization initiator is preferable because it makes it easier to control the polymerization rate. It is preferable to reduce the copolymer composition distribution, since a copolymer excellent in balance between heat resistance and strength can be obtained. The copolymer composition distribution can be evaluated by the transparency of the styrene-based copolymer. As a standard of the copolymer composition distribution, it is preferable that the total light transmittance for a thickness of 2 mm measured according to ASTM D 1003 is 89% or more.

Further, as for the method for obtaining a copolymer having a preferable weight average molecular weight (Mw) in the range of 100,000 to 300,000, there is a method of adjusting the addition amount of solvent and the addition amount of chain transfer agent, in addition to adjusting the polymerization temperature, polymerization time, and addition amount of the polymerization initiator. The chain transfer agent is not particularly limited, but for example, known chain transfer agents such as n-dodecyl mercaptan, t-dodecyl mercaptan, or 2,4-diphenyl-4-methyl-1-pentene can be used.

The method for recovering the copolymer of the present invention from the polymerization solution is not particularly limited, and a known devolatilization technique can be used. For example, there is a method in which a polymerization solution is continuously fed to a twin-screw extruder using a gear pump and the polymerization solvent, unreacted monomer, etc. are subjected to volatilization treatment. A devolatilized component containing the polymerization solvent, the unreacted monomer and the like is condensed and recovered using a condenser and the like, and the condensed liquid is purified in a distillation column, whereby the polymerization solvent can be reused.

There is no particular limitation on the method for obtaining the resin composition comprising the styrene-based copolymer and the methacrylic resin of the present invention thus obtained, and a known melt-kneading technique can be used. As the melt-kneading apparatus which can be suitably used, there are screw extruders such as single screw extruder, intermeshed co-rotating extruder or counter-rotating twin-screw extruder, non-intermeshed twin-screw extruder or incomplete intermeshed twin-screw extruder; banbury mixer, co-kneader, and mixing roll and the like.

The methacrylic resin (B) in the resin composition of the present invention is a polymer having a (meth) acrylic ester monomer unit, for example, polymethyl methacrylate. In the present invention, it is also possible to have a styrene-based monomer unit. The styrene-based monomer unit can be used in an amount of 20 mass%.

The resin composition of the present invention comprises 55 to 70 mass% of the styrene-based copolymer (A) and 30 to 45 mass% of the methacrylic resin(B). When the proportion of the styrene-based copolymer (A) is 70 mass% or less, the transparency, haze, heat resistance, hue and impact resistance of the molded article are particularly improved. When the proportion of the styrene-based copolymer (A) is 65 mass% or less, the transparency, heat resistance and impact resistance of the molded article are further improved and the surface hardness is particularly high. When the proportion of the styrene-based copolymer (A) is 55 mass% or more, the dimensional stability of the molded article is particularly high.

When the methacrylic resin (B) in the resin composition is more than 85 mass%, the heat resistance is lowered.

As a production method of the methacrylic resin (B) in the resin composition, a known method can be adopted. For example, bulk polymerization, solution polymerization, suspension polymerization, emulsion polymerization and the like can be used. As an operation method of the reaction apparatus, any of the continuous type, batch type, semi-batch type can be applied. From the viewpoint of quality and productivity, bulk polymerization or solution polymerization is preferable, and continuous type is preferable. Examples of the solvents for bulk polymerization or solution polymerization include alkylbenzene such as benzene, toluene, ethylbenzene and xylem; ketone such as acetone, methyl ethyl ketone, methyl isobutyl ketone; aliphatic hydrocarbons such as hexane and cyclohexane; butyl acetate, methanol, ethanol, and the like. The solvent is preferably ethylbenzene and toluene.

For bulk polymerization or solution polymerization of the methacrylic resin (B) in the resin composition, a polymerization initiator and a chain transfer agent can be used. The polymerization temperature is preferably in the range of 100 to 180°C. Examples of the polymerization initiator include peroxy ketal such as 1,1-di (t-butylperoxy) cyclohexane, 2,2-di (t-butylperoxy) butane, 2,2-di (4,4-di-t-butylperoxycyclohexyl) propane, 1,1-di (t-amylperoxy) cyclohexane; hydroperoxide such as cumene hydroperoxide and t-butyl hydroperoxide; alkyl peroxide such as t-butyl peroxyacetate and t-amyl peroxy isononanoate; dialkyl peroxide such as t-butyl cumyl peroxide, di-t-butyl peroxide, dicumyl peroxide, di-t-hexyl peroxide; peroxyester such as t-butyl peroxyacetate, t-butyl peroxybenzoate and t-butylperoxy isopropyl monocarbonate; peroxy carbonate such as t-butyl peroxy isopropyl carbonate and polyether tetrakis (t-butyl peroxy carbonate); N, N'-azobis (cyclohexane-1-carbonitrile), N, N'-azobis (2-methylbutyronitrile), N, N'-azobis (2,4-dimethylvaleronitrile), N, N'-azobis [2-(hydroxymethyl) propionitrile] and the like. These polymerization initiators may be used alone or in combination of two or more. Examples of the chain transfer agent include n-octyl mercaptan, n-dodecyl mercaptan, t-dodecyl mercaptan, $\alpha$-methyl styrene dimer, ethyl thioglycolate, limonene, terpinolene and the like.

A known method can be adopted as a devolatilization method for removing unreacted monomers and volatile components such as solvents used for solution polymerization from the solution after completion of polymerization of the methacrylic resin (B) in the resin composition. For example, a vacuum devolatilizing tank equipped with a heater or a devolatilizing extruder equipped with a vent can be used. The devolatilized molten methacrylic resin (B) can be transferred to the granulation process, extruded from the porous die in a strand form, and processed into a pellet shape by a cold cut method, an air hot cut method, or an underwater hot cut method.

If necessary, for example, release agents, antioxidants, ultraviolet absorbers, dye pigments and the like may be added as components constituting the resin composition of the present invention.

Since the resin composition of the present invention is excellent in transparency, heat resistance, moldability, surface hardness, impact resistance and appearance, the molded article thereof is suitable for a transparent member for an automobile, and is particularly suitable for a transparent cover for a meter panel and a hemispherical lens of an automobile. It is also suitable for various lenses (lamp lenses for vehicles such as automobiles, lenses for LED illumination, camera lenses of smart phones, etc.), lighting covers, other transparent members for automobiles, and the like.

## EXAMPLES

Hereinafter, examples will be given in order to explain the present invention in more detail. However, the present invention is not limited to these examples at all.

< Manufacturing Example of Styrene-based Copolymer (a-1) >

Prepared beforehand were: a 20 mass% of maleic anhydride solution in which a maleic anhydride was dissolved at a concentration of 20 mass% into methyl isobutyl ketone; and a 2 mass% of t-butylperoxy-2-ethyl hexanoate solution in which t-butylperoxy-2-ethyl hexanoate was diluted at 2 mass% of into methyl isobutyl ketone. Those solutions were used for polymerization.

To a 120-L autoclave equipped with an agitator, 3.0kg of 20% maleic anhydride solution, 24kg of styrene, 10kg of methyl methacrylate, 20g of t-dodecylmercaptan were added. After replacing the gas phase with nitrogen gas, the temperature was raised to 98°C over 40 minutes with stirring. After the temperature had been raised, the temperature was maintained at 98°C while the 20% maleic anhydride solution and the 2%t-butylperoxy-2-ethyl hexanoate solution were each continuously added. The 20% maleic anhydride solution was added such that the rate of addition was changed step-wise at 3.38kg/h from the start of addition to 4h, at 2.7kg/h from 4 h to 7 h, at 1.35kg/h from 7 h to 10 h, at 0.45kg/h from 10 h to 13 h. The total of 27.02kg was added. The 2 % t-butylperoxy-2-ethyl hexanoate solution was added such that the rate of addition was changed step-wise at 0.24kg/h from the start of addition to 7 h and at 0.39kg / h from 7 h to 13 h. The total of 4.02 kg was added. The polymerization temperature was kept at 98°C from the start of addition to 7 h, was then increased to 116°C over 6 h at a programming rate of 3°C/h, and was further kept at 116°C for 1 h to complete the polymerization. The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a styrene-based copolymer (a-1) in pellet form. The composition of the resulting styrene-based copolymer (a-1) was analyzed by C-13 NMR spectroscopy. Further, the weight average molecular weight (Mw) was measured. Further, an injection molding machine (IS-50EPN, manufactured by TOSHIBA MACHINE Co., LTD) was used to perform injection molding under molding conditions at a cylinder temperature of 230°C and a die temperature of 40°C to give a mirror surface plate with a length of 90 mm, a width of 55 mm, and a thickness of 2 mm. After that, a haze meter (NDH-1001DP model, manufactured by NIPPON DENSHOKU INDUSTRIES Co., LTD.) was used to measure the total light transmittance of the mirror surface plate with a thickness of 2 mm in accordance with ASTM D1003. Also, the charpy notchless impact strength was measured at 23 °C according to JIS K 7111 using a specimen of 80 mm × 10 mm and a thickness of 4 mm. Results of composition analysis and various measured results are shown in Table 1.

< Manufacturing Example of Styrene-based Copolymer (a-2) >

The 20 % maleic anhydride solution and the 2 % t-butylperoxy-2-ethyl hexanoate solution were prepared in the same manner as in a-1.

To a 120-L autoclave equipped with an agitator, 3.8kg of 20 % maleic anhydride solution, 21.6kg of styrene, 10.8kg of methyl methacrylate, 20g of t-dodecylmercaptan were added. After replacing the gas phase with nitrogen gas, the temperature was raised to 96°C over 40 minutes with stirring. After the temperature had been raised, the temperature was maintained at 96°C while the 20% maleic anhydride solution and the 2%t-butylperoxy-2-ethyl hexanoate solution were each continuously added. The 20% maleic anhydride solution was added such that the rate of addition was changed step-wise at 4.28kg/h from the start of addition to 4h, at 3.42kg/h from 4 h to 7 h, at 1.71kg/h from 7 h to 10 h, at 0.57kg / h from 10 h to 13 h. The total of 34.22 kg was added. The 2 % t-butylperoxy-2-ethyl hexanoate solution was added such that the rate of addition was changed step-wise at 0.24kg/h from the start of addition to 7 h and at 0.39kg / h from 7 h to 13 h. The total of 4.02kg was added. The polymerization temperature was kept at 96°C from the start of addition to 7 h, was then increased to 120°C over 6 h at a programming rate of 4°C/h, and was further kept at 120°C for 1 h to complete the polymerization. The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a styrene-based copolymer (a-2) in pellet form. The resulting styrene-based copolymer (a-2) was used to determine, like the case of styrene-based copolymer (a-1), the composition, molecular weight, total light transmittance of the mirror surface plate with a thickness of 2 mm, and charpy notchless impact strength. Table 1 shows the measured results.

< Manufacturing Example of Styrene-based Copolymer (a-3) >

The 20 % maleic anhydride solution and the 2 % t-butylperoxy-2-ethyl hexanoate solution were prepared in the same manner as in a-1.

To a 120-L autoclave equipped with an agitator, 3.0kg of 20 % maleic anhydride solution, 24kg of styrene, 10kg of methyl methacrylate, 80g of t-dodecylmercaptan were added. After replacing the gas phase with nitrogen gas, the temperature was raised to 98°C over 40 minutes with stirring. After the temperature had been raised, the temperature was maintained at 98°C while 20 % maleic anhydride solution and the 2 % t-butylperoxy-2-ethyl hexanoate solution were each continuously added. The 20% maleic anhydride solution was added such that the rate of addition was changed step-wise at 3.38kg/h from the start of addition to 4h, at 2.7kg/h from 4 h to 7 h, at 1.35kg/h from 7 h to 10 h, at 0.45kg/h from 10 h to 13 h. The total of 27.02kg was added. The 2 % t-butylperoxy-2-ethyl hexanoate solution was added such that the rate of addition was changed step-wise at 0.24kg/h from the start of addition to 7 h, and at 0.39kg / h from 7 h to 13 h. The total of 4.02 kg was added. The polymerization temperature was kept at 98°C from the start of addition to 7 h, was then increased to 116°C over 6 h at a programming rate of 3°C/h, and was further kept at 116°C for 1 h to complete the polymerization. The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a styrene-based copolymer (a-3) in pellet form. The composition of the resulting styrene-based copolymer (a-3) was used to determine, like the case of styrene-based copolymer (a-1), the composition, molecular weight, total light transmittance of the mirror surface plate with a thickness of 2 mm, and charpy notchless impact strength. Table 1 shows the measured results.

< Manufacturing Example of Styrene-based copolymer (a-4) >

The 20 % maleic anhydride solution and the 2 % t-butylperoxy-2-ethyl hexanoate solution were prepared in the same manner as in a-1.

To a 120-L autoclave equipped with an agitator, 3.0kg of 20 % maleic anhydride solution, 8kg of styrene, 26kg of methyl methacrylate, 20g of t-dodecylmercaptan were added. After replacing the gas phase with nitrogen gas, the temperature was raised to 90°C over 40 minutes with stirring. After the temperature had been raised, the temperature was maintained at 90°C while the 20% maleic anhydride solution and the 2% t-butylperoxy-2-ethyl hexanoate solution were each continuously added. The 20% maleic anhydride solution was added such that the rate of addition was changed step-wise at 3.04kg/h from the start of addition to 4h, at 2.7kg/h from 4 h to 7 h, at 1.35kg/h from 7 h to 10 h, at 0.9kg / h from 10 h to 13 h. The total of 27.01 kg was added. The 2 % t-butylperoxy-2-ethyl hexanoate solution was added such that the rate of addition was changed step-wise at 0.09kg/h from the start of addition to 7 h, and at 0.15kg / h from 7 h to 13 h. The total of 1.53kg kg was added. The polymerization temperature was kept at 96°C from the start of addition to 7 h, was then increased to 120°C over 6 h at a programming rate of 5°C/h, and was further kept at 120°C for 1 h to complete the polymerization. The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a styrene-based copolymer (a-4) in pellet form. The composition of the resulting styrene-based copolymer (a-4) was used to determine, like the case of styrene-based copolymer (a-1), the composition, molecular weight, total light transmittance of the mirror surface plate with a thickness of 2 mm, and charpy notchless impact strength. Table 1 shows the measured results.

< Manufacturing Example of Styrene-based copolymer (a-5) >

The 20 % maleic anhydride solution and the 2 % t-butylperoxy-2-ethyl hexanoate solution were prepared in the same manner as in a-1.

To a 120-L autoclave equipped with an agitator, 2.8kg of 20 % maleic anhydride solution, 32.8kg of styrene, 1.6kg of methyl methacrylate, 20g of t-dodecylmercaptan were added. After replacing the gas phase with nitrogen gas, the temperature was raised to 98°C over 40 minutes with stirring. After the temperature had been raised, the temperature was maintained at 98°C while the 20% maleic anhydride solution and the 2%t-butylperoxy-2-ethyl hexanoate solution were each continuously added. The 20% maleic anhydride solution was added such that the rate of addition was changed step-wise at 2.84kg/h from the start of addition to 4h, at 2.52kg/h from 4 h to 7 h, at 1.26kg/h from 7 h to 10 h, and at 0.84kg / h from 10 h to 13 h. The total of 25.22kg kg was added. The 2% t-butylperoxy-2-ethyl hexanoate solution was added such that the rate of addition was changed step-wise at 0.3kg/h from the start of addition to 7 h and at 0.48kg / h from 7 h to 13 h. The total of 4.98 kg was added. The polymerization temperature was kept at 98°C from the start of addition to 7 h, was then increased to 116°C over 6 h at a programming rate of 3°C/h, and was further kept at 116°C for 1 h to complete the polymerization. The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a styrene-based copolymer (a-5) in pellet form. The composition of the resulting styrene-based copolymer (a-5) was used to determine, like the case of styrene-based copolymer (a-1), the composition, molecular weight, total light transmittance of the mirror surface plate with a thickness of 2 mm, and charpy notchless impact strength. Table 1 shows the measured results.

< Manufacturing Example of Styrene-based Copolymer (a-6) >

An 8 % maleic anhydride solution obtained by dissolving maleic anhydride in methyl isobutyl ketone at a concentration of 8 mass% was prepared, and the 2 % t-butylperoxy-2-ethyl hexanoate solution was prepared in the same manner as in a-1.

To a 120-L autoclave equipped with an agitator, 2.5kg of 8 % maleic anhydride solution, 26kg of styrene, 12kg of methyl methacrylate, 20g of t-dodecylmercaptan were added. After replacing the gas phase with nitrogen gas, the temperature was raised to 102°C over 40 minutes with stirring. After the temperature had been raised, the temperature was maintained at 102°C while the 8% maleic anhydride solution and the 2%t-butylperoxy-2-ethyl hexanoate solution were each continuously added. The 8 % maleic anhydride solution was added such that the rate of addition was changed step-wise at 2.53kg/h from the start of addition to 4h, at 1.88kg/h from 4 h to 7 h, at 1.5kg/h from 7 h to 10 h, at 0.75kg / h from 10 h to 13 h. The total of 22.51kg was added. The 2 % t-butylperoxy-2-ethyl hexanoate solution was added such that the rate of addition was changed step-wise at 0.36kg/h from the start of addition to 7 h, at 0.58kg/h from 7 h to 13 h. The total of 6 kg was added. The polymerization temperature was kept at 102°C from the start of addition to 7 h, was then increased to 120°C over 6h at a programming rate of 3°C/ h, and was further kept at 120°C for 1h to complete the polymerization. The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a styrene-based copolymer (a-6) in pellet form/ The composition of the resulting styrene-based copolymer (a-6) was used to determine, like the case of styrene-based copolymer (a-1), the composition, molecular weight, total light transmittance of the mirror surface plate with a thickness of 2 mm, and charpy notchless impact strength. Table 1 shows the measured results.

< Manufacturing Example of Styrene-based Copolymer (a-7) >

A 25 % maleic anhydride solution obtained by dissolving maleic anhydride in methyl isobutyl ketone at a concentration of 25 mass% was prepared, and the 2% t-butylperoxy-2-ethyl hexanoate solution was prepared in the same manner as in a-1.

To a 120-L autoclave equipped with an agitator, 6.08kg of 25% maleic anhydride solution, 20kg of styrene, 4.8kg of methyl methacrylate, 20g of t-dodecylmercaptan were added. After replacing the gas phase with nitrogen gas, the temperature was raised to 90°C over 40 minutes with stirring. After the temperature had been raised, the temperature was maintained at 90°C while the 25% maleic anhydride solution and the 2 % t-butylperoxy-2-ethyl hexanoate solution were each continuously added. 25% maleic anhydride solution was added such that the rate of addition was changed step-wise at 6.16kg/h from the start of addition to 4h, at 5.48kg/h from 4 h to 7 h, at 2.74kg/h from 7 h to 10 h, at 1.82kg / h from 10 h to 13 h. The total of 54.76kg kg was added. 2% t-butylperoxy-2-ethyl hexanoate solution was added such that the rate of addition was changed step-wise at 0.06kg/h from the start of addition to 7 h and at 0.1kg / h from 7 h to 13 h. The total of 1.02 kg was added. The polymerization temperature was kept at 90°C from the start of addition to 7 h, was then increased to 120°C over 6h at a programming rate of 5°C/ h, and was further kept at 120°C for 1h to complete the polymerization. The polymerization solution was continuously fed using a gear pump to a twin-screw devolatilization extruder. Next, methyl isobutyl ketone and a tiny amount of unreacted monomers, etc., were subjected to devolatilization treatment. Then, the remaining material was extruded and cut to give a styrene-based copolymer (a-7) in pellet form. The composition of the resulting styrene-based copolymer (a-7) was used to determine, like the case of styrene-based copolymer (a-1), the composition, molecular weight, total light transmittance of the mirror surface plate with a thickness of 2 mm, and charpy notchless impact strength. Table 1 shows the measured results.

Commercially available acrylpet VH001 (manufactured by Mitsubishi Rayon Co., Ltd.) was used as the methacrylic resin (B).

Table 1

| Results of analyzing styrene-based copolymer (a-1)~(a-7) | | a-1 | a-2 | a-3 | a-4 | a-5 | a-6 | a-7 |
|---|---|---|---|---|---|---|---|---|
| Composition Analysis: ST unit | mass% | 59.8 | 54.7 | 59.7 | 28.9 | 81.0 | 64.1 | 53.0 |
| Composition Analysis: MMA unit | mass% | 24.7 | 25.8 | 24.6 | 56.2 | 4.2 | 30.6 | 8.8 |
| Composition Analysis : MAH unit | mass% | 15.5 | 19.5 | 15.7 | 14.9 | 14.8 | 5.3 | 38.2 |
| Weight average molecular weight (Mw) x10$^4$ | g/mol | 16.2 | 17.8 | 8.3 | 17.2 | 15.8 | 14.9 | 18.8 |
| Total light transmittance of the mirror surface plate with a thickness of 2 mm | % | 91.5 | 90.4 | 91.5 | 89.8 | 88.8 | 89.5 | 86.7 |
| Charpy notchless impact strength | kJ/m$^2$ | 13 | 13 | 4 | 9 | 15 | 17 | 4 |
| ※ In the table, the styrene monomer is abbreviated as ST, the methyl methacrylate monomer is abbreviated as MMA, and the maleic acid anhydride monomer is abbreviated as MAH. | | | | | | | | |

< Examples and Comparative Examples >

The styrene-based copolymer (a-1) to (a-7) described in the above manufacturing examples was mixed with methacrylic resin (B) at a ratio (mass%) designated in Table 2 using a henschel mixer. Then, the mixture was subjected to melt-kneading at 240°C using a twin-screw extruder (TEM-35B, manufactured by TOSHIBA MACHINE CO., LTD.) and was pelleted to give a resin composition. Each resin composition was evaluated as follows. Table 2 shows the evaluation results. Incidentally, the evaluation of the simple substance (A) or (B) was carried out in Comparative Examples 1, 2, 4, 6, 9, 10 and 13.

| Table 2 | | Example | | | | Comparative Example | | | | | | | | | | | | |
|---|---|---|---|---|---|---|---|---|---|---|---|---|---|---|---|---|---|---|
| | | 1 | 2 | 3 | 4 | 1 | 2 | 3 | 4 | 5 | 6 | 7 | 8 | 9 | 10 | 11 | 12 | 13 | 14 |
| Kind of resin | a-1 | 70 | 65 | 60 | 55 | | | | | | | | | | 100 | 75 | 50 | | |
| | a-2 | | | | | | | | | | | | | | | | | 100 | 50 |
| | a-3 | | | | | 100 | | | | | | | | | | | | | |
| | a-4 | | | | | | 100 | 60 | | | | | | | | | | | |
| | a-5 | | | | | | | | 100 | 60 | | | | | | | | | |
| | a-5 | | | | | | | | | | 100 | | | | | | | | |
| | a-7 | | | | | | | | | | | 100 | 50 | | | | | | |
| | B | 30 | 35 | 40 | 45 | | | 40 | | 40 | | | 50 | 100 | | 25 | 50 | | 50 |
| Evaluation | Total light transmittance (%) | 91,8 | 91,9 | 92,0 | 92,3 | 91,5 | 89,8 | 91,0 | 88,8 | <86 | 89,5 | E6,7 | <86 | 93,0 | 91,5 | 91,6 | 92,6 | 90,4 | 91,6 |
| | HAZE(%) | 0,2 | 0,2 | 0,2 | 0,2 | 0,2 | 0,2 | 0,2 | 0,2 | 1< | 0,2 | 0,5 | 1< | 0,2 | 0,2 | 0,3 | 0,3 | 0,2 | 0,2 |
| | YI(%) | 0,7 | 0,7 | 0,7 | 0,7 | 0,7 | 2< | 2< | 0,8 | 0,7 | 0,7 | 2< | 2< | 0,5 | 0,8 | 0,8 | 0,6 | 1,1 | 1 |
| | Heat resistant (Vicat softening temperature) [°C] | 122 | 121 | 120 | 119 | 125 | 129 | 122 | 125 | 119 | 111 | 165 | 137 | 108 | 126 | 123 | 117 | 132 | 122 |
| | Impact resistance (Charpy notchless impact strength) [kJ/m$^2$] | 14 | 15 | 15 | 16 | 4 | 9 | 14 | 15 | 11 | 17 | 4 | 9 | 20 | 13 | 13 | 17 | 13 | 16 |
| | Dimensional | ◎ | ◎ | ◎ | ◎ | ◎ | ○ | Δ | ◎ | ◎ | Δ | ◎ | ○ | × | ◎ | ◎ | ○ | ◎ | ○ |
| | Surface hardness (Pencil hardness) | H | 2H | 2H | 3H | H | 2H | 3H | HB | 2H | H | F | 2H | 3H | H | H | 3H | H | 3H |
| | Visibility | ○ | ○ | ○ | ○ | ○ | × | × | ○ | × | ○ | × | × | ○ | ○ | ○ | ○ | ○ | ○ |
| | Appearance | ○ | ○ | ○ | ○ | ○ | × | × | × | × | ○ | × | × | ○ | ○ | ○ | ○ | ○ | ○ |

(Haze and Hue)

An injection molding machine (IS-50EPN, manufactured by TOSHIBA MACHINE CO., LTD.) was used to perform molding under molding conditions at a cylinder temperature of 230°C and a die temperature of 40°C to give a mirror surface plate with a length of 90 mm, a width of 55 mm, and a thickness of 2 mm. Then, a haze meter (NDH-1001DP model, manufactured by NIPPON DENSHOKU INDUSTRIES Co., LTD.) was used to measure the haze of the mirror surface plate in accordance with ASTM D1003. In addition, the YI value of hue was measured using an ultraviolet and visible spectrophotometer (V-670 manufactured by JASCO Corporation) according to JIS K 7105.

(Heat Resistance)

An injection molding machine (IS-50EPN, manufactured by TOSHIBA MACHINE CO., LTD.) was used to perform molding under molding conditions at a cylinder temperature of 230°C and a die temperature of 40°C to give a specimen with 10 mm x 10 mm and a thickness of 4 mm. Then, an HDT & VSPT test apparatus manufactured by Toyo Seiki Seisaku-sho, Ltd. was used to measure the vicat softening temperature (load: 50N, programming rate: 50°C / hour) of the specimen in accordance with JIS K7206:1999.

(Impact Resistance)

An injection molding machine (IS-50EPN, manufactured by TOSHIBA MACHINE CO., LTD.) was used to perform molding under molding conditions at a cylinder temperature of 230°C and a die temperature of 40°C to give a specimen with 80 mm x 10 mm and a thickness of 4 mm. Then, the charpy notchless impact strength was measured in accordance with JIS K7111.

(Dimensional Stability)

An injection molding machine (EC550SX, manufactured by TOSHIBA MACHINE CO., LTD.) was used to perform molding under molding conditions at a cylinder temperature of 230°C and a die temperature of 40°C to give a molded article with a length of 200 mm, a width of 60 mm and a thickness of 2 mm. Using this molded article, a durability test was conducted under the conditions of a temperature of 85 °C, a humidity of 85%, and a time of 1000 h, and the dimensional change rate before and after the test was measured.

$$\text{Dimensional change rate} = \{\text{Absolute value of (Longitudinal dimension before test - Longitudinal dimension after test) / Longitudinal dimension before test}\} \times 100$$

The criteria are summarized as follows. ◎ and ○ were accepted.

◎: The dimensional change rate is less than 0.2%.
○: The dimensional change rate is 0.2 % or more to less than 0.25%.
Δ: The dimensional change rate is 0.25 % or more to less than 0.35.
×: The dimensional change rate is 0.35 % or more.

(Surface Hardness)

An injection molding machine (EC550SX, manufactured by TOSHIBA MACHINE CO., LTD.) was used to perform molding under molding conditions at a cylinder temperature of 230°C and a die temperature of 40°C to give a transparent cover for a meter panel with a thickness of 2 mm. The molded article was used to measure the pencil hardness (load: 750g, angle: 45°C). H or more (especially H to 3 H) was judged to be good. As a measuring machine, a pencil scratch hardness tester (KT-VF2380, manufactured by COTEC, Inc.) was used.

(Visibility)

An injection molding machine (EC550SX, manufactured by TOSHIBA MACHINE CO., LTD.) was used to perform molding under molding conditions at a cylinder temperature of 230°C and a die temperature of 40°C to give a transparent cover for a meter panel with a thickness of 2 mm. The visibility of the meter panel as seen through the transparent cover was evaluated. The criteria are summarized as follows.

○: The visibility of the meter panel is good.
×: The visibility of the meter panel is poor.

(Appearance)

An injection molding machine (EC550SX, manufactured by TOSHIBA MACHINE CO., LTD.) was used to perform molding under molding conditions at a cylinder temperature of 230°C and a die temperature of 40°C to give 30 samples of a hemispherical lens with a diameter of 80 mm. The samples were visually inspected to count the number of samples in which poor appearances due to coloring, foaming, burning contamination, and blocking had occurred. Appearance evaluation was carried out. The criteria are summarized as follows.

○: The number of samples with poor appearance was from 0 to 1.
×: The number of samples with poor appearance was 2 or more.

In each of the examples relating to the resin composition of the present invention comprising the copolymer (a-1) and the methacrylic resin (B), the transparency, heat resistance, surface hardness, impact resistance, hue are good, the visibility of the meter panel is excellent, the moldability is good, and the appearance of the hemispherical lens is also excellent. On the other hand, in the comparative examples relating to the resin composition comprising the copolymers (a-1) to (a-7) and the methacrylic resin (B) in various ratios not meeting the requirements of the present invention, any of the physical properties was inferior to the examples.

By using the resin composition of the present invention, it is possible to provide a molded article having excellent transparency, heat resistance, surface hardness, impact resistance, hue, for example, an automobile transparent member, and is particularly suitable for a transparent cover for a meter panel and a hemispherical lens.

## Claims

1. A resin composition comprising 55 to 70 mass% of a styrene-based copolymer (A) and 30 to 45 mass% of a methacrylic resin (B), wherein the styrene-based copolymer (A) comprises 45 to 85 mass% of an aromatic vinyl monomer unit, 5 to 45 mass% of a (meth)acrylic ester monomer unit, and 10 to 30 mass% of an unsaturated dicarboxylic anhydride monomer unit, and has a weight average molecular weight (Mw) of 100,000 to 300,000, and a total light transmittance of 89% or more for a thickness of 2 mm.

2. The resin composition of claim 1, wherein the charpy notchless impact strength is 10 kJ/m$^2$ or more.

3. The resin composition of claim 1 or 2, wherein the vicat softening temperature measured at a load of 50 N and a programming rate of 50°C/hour is 115°C or more.

4. A resin composition for an automobile transparent member comprising the resin composition according to any one of claims 1 to 3.

5. A transparent cover for a meter panel obtained from the resin composition for an automobile transparent member according to claim 4.

6. A hemispherical lens obtained from the resin composition for an automobile transparent member according to claim 4.

## Patentansprüche

1. Harzzusammensetzung, umfassend 55 bis 70 Masse-% eines Copolymers auf Styrolbasis (A) und 30 bis 45 Masse-% eines Methacrylharzes (B), wobei das Copolymer auf Styrolbasis (A) 45 bis 85 Masse-% einer aromatischen Vinyl-Monomereinheit, 5 bis 45 Masse-% einer (Meth)acrylsäureester-Monomereinheit und 10 bis 30 Masse-% einer ungesättigten Dicarbonsäureanhydrid-Monomereinheit umfasst, und ein Gewichtsmittel des Molekulargewichts (Mw) von 100 000 bis 300 000 und eine Gesamtlichtdurchlässigkeit von 89 % oder mehr bei einer Dicke von 2 mm aufweist.

2. Harzzusammensetzung nach Anspruch 1, wobei die Charpy-Schlagzähigkeit (ohne Kerbe) 10 kJ/m$^2$ oder mehr beträgt.

**3.** Harzzusammensetzung nach Anspruch 1 oder 2, wobei die Vicat-Erweichungstemperatur, gemessen bei einer Belastung von 50 N und einer Programmierungsrate von 50 °C/h, 115 °C oder mehr beträgt.

**4.** Harzzusammensetzung für ein transparentes Automobilelement, umfassend die Harzzusammensetzung nach einem der Ansprüche 1 bis 3.

**5.** Transparente Abdeckung für eine Instrumententafel, erhalten aus der Harzzusammensetzung für ein transparentes Automobilelement nach Anspruch 4.

**6.** Halbkugelförmige Linse, erhalten aus der Harzzusammensetzung für ein transparentes Automobilelement nach Anspruch 4.

## Revendications

**1.** Composition de résine comprenant de 55 à 70 % massique d'un copolymère à base de styrène (A) et de 30 à 45 % massique d'une résine méthacrylique (B), le copolymère à base de styrène (A) comprenant de 45 à 85 % massique d'une unité monomère vinylique aromatique, de 5 à 45 % massique d'une unité monomère d'ester (méth)acrylique, et de 10 à 30 % massique d'une unité monomère anhydride dicarboxylique insaturée, et ayant une masse moléculaire moyenne en poids (Mw) de 100 000 à 300 000, et une transmission de la lumière totale de 89 % ou plus pour une épaisseur de 2 mm.

**2.** Composition de résine selon la revendication 1, la résistance aux chocs sans entaille Charpy étant de 10 kJ/m$^2$ ou plus.

**3.** Composition de résine selon la revendication 1 ou 2, la température de ramollissement Vicat mesurée à une charge de 50 N et un taux de programmation de 50 °C/heure étant de 115 °C ou plus.

**4.** Composition de résine pour un élément transparent automobile comprenant la composition de résine selon l'une quelconque des revendications 1 à 3.

**5.** Couverture transparente pour un panneau de compteur obtenue à partir de la composition de résine pour un élément transparent automobile selon la revendication 4.

**6.** Lentille hémisphérique obtenue à partir de la composition de résine pour un élément transparent automobile selon la revendication 4.

**EP 3 296 357 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S57153008 A
- JP 2011026563 A
- WO 2014021264 A1
- JP 2014159517 A
- WO 2014065129 A1
- JP S6211760 A
- WO 2014021265 A1
- EP 3181600 A1